# EUROPEAN PATENT APPLICATION

(11) **EP 2 388 882 A2**
(43) Date of publication of application: **23.11.2011**
(21) Application number: 11165975.1
(22) Date of filing: 13.05.2011
(51) Int. Cl.: H02J 1/10, H02J 7/00

(54) **Parallel powering of portable electrical devices**

(30) Priority: 18.05.2010 US 782533
(71) Applicant: O2 Micro, Inc., Santa Clara, CA 95054 (US)
(72) Inventor: Hartular, Alexandru, SAN JOSE, 95129 (US); Lipcsei, Laszlo, Campbell, 95008 (US); Niculae, Marian, San Jose, CA 95117, 95117 (US); Spiridon, Constantin, San Jose,, 95130 (US)
(74) Representative: Lippert, Stachow & Partner

(57) **Abstract**

A system (100) may include an electronic device (110) configured to consume a supply current; an AC to DC adapter (104) configured to be coupled to the electronic device, wherein the AC to DC adapter has a maximum rated output current; a battery (108) configured to be coupled to the electronic device; DC to DC converter (106) configured to be coupled to the battery (108) and the electronic device (110); and a controller (102) configured to couple the AC to DC adapter (104) to the electronic device, the controller (102) further configured to couple the DC to DC converter (104) to the battery (108) and the electronic device (110) when the supply current exceeds the maximum rated output current of the AC to DC adapter (104).

## Description

### CROSS REFERENCE TO RELATED APPLICATIONS

This is a continuation-in-part of, and claims the benefit of, U.S. Application Serial Number 11/283,088, filed November 18, 2005, now U.S. Patent Number 7,719,236, which claims benefit of U.S. Provisional Application No. 60/654,750 filed February 18, 2005, the teachings all of which are incorporated herein by reference.

### FIELD

The present disclosure relates to portable electrical devices and, more particularly, to parallel powering of such devices.

### BACKGROUND

A wide variety of portable electrical devices are available today including, but not limited to, laptop computers, personal digital assistants, mobile phones, and cordless power tools. Such portable electrical devices may utilize a rechargeable battery for providing power to operate the device in a battery supply mode. An adapter such as an ACDC or DCDC adapter may also be available to supply power to the portable electrical device in an adapter supply mode. The rechargeable battery may or may not be charged in the adapter supply mode depending on the presence and condition of the rechargeable battery. In some instances, it is advantageous to supply a system load of the portable electrical device with power from both the adapter and the rechargeable battery. To do so, some conventional embodiments have controlled the output voltage of the adapter but have not adjusted the output voltage of the rechargeable battery.

Accordingly, there is a need for adjusting the output voltage of a rechargeable battery to enable the rechargeable battery and adapter to simultaneously provided power to a load of the portable electrical device.

### BRIEF SUMMARY OF THE INVENTION

According to one aspect of the invention, there is provided a system. The system may include an electronic device configured to consume a supply current; an AC to DC adapter configured to be coupled to the electronic device, wherein the AC to DC adapter has a maximum rated output current; a battery configured to be coupled to the electronic device; a DC to DC converter configured to be coupled to the battery and the electronic device; and a controller configured to couple the AC to DC adapter to the electronic device, the controller further configured to couple the DC to DC converter to the battery and the electronic device when the supply current exceeds the maximum rated output current of the AC to DC adapter. Also, said system may further comprise a current sense circuit coupled to the AC to DC adapter and the controller, the current sense circuit configured to sense an output current of the AC to DC adapter, wherein the controller is configured to couple the DC to DC converter to the battery and the electronic device based, at least in part, on the sensed current. Also, in said system, said DC to DC converter may further comprise a buck converter, wherein the controller is further configured to couple the buck DC to DC converter to the AC to DC adapter and to the battery, and to control the buck DC to DC converter to charge the battery when the supply current to the electronic device is less than the maximum rated current of the AC to DC adapter. Also, in said system, said controller may further be configured to control an output current of the AC to DC adapter to maintain the output current of the AC to DC adapter between a first value and a second value, less than the first value, when the supply current exceeds the maximum rated output current of the AC to DC adapter. Also, said the first value may be the maximum rated output current of the AC to DC adapter and the second value may be a hysteresis value. Also, in said system, said DC to DC converter may further comprise a boost DC to DC converter. Also, in said system, said controller may further be configured to control an output current of the AC to DC adapter to maintain the output current of the AC to DC adapter approximately equal to the maximum rated output current of the AC to DC adapter.

According to another aspect, there is provided an apparatus. The apparatus may include a DC to DC converter configured to be coupled to a battery and an electronic device; and a controller coupled to the DC to DC converter, the controller configured to be coupled to an AC to DC adapter, wherein the controller is configured to couple the AC to DC adapter to the electronic device and the DC to DC converter to the battery and the electronic device, if a supply current consumed by the electronic device exceeds a maximum rated output current of the AC to DC adapter.

According to yet another aspect, there is provided a method. The method may include supplying a first current to an electronic device from an AC to DC adapter when a supply current consumed by the electronic device is less than or equal to a maximum rated output current of the electronic device; and supplying the first current to the electronic device from the AC to DC adapter and a second current to the electronic device from a DC to DC converter coupled to a battery when the supply current consumed by the electronic device exceeds the maximum rated output of the electronic device.

### BRIEF DESCRIPTION OF THE DRAWINGS

Features and advantages of embodiments of the claimed subject matter will become apparent as the following Detailed Description proceeds, and upon reference to the Drawings, where like numerals depict like parts, and in which:
FIG. 1A is a diagram of a portable electrical device including a DC to DC converter and controller consistent with an embodiment for controlling the DC to DC converter;
FIG. 1B is a diagram of an embodiment of the DC to DC converter of FIG. 1A;
FIG. 2 is a diagram of an embodiment of the controller of FIG. 1A;
FIG. 3 is a diagram of an embodiment of the charging switch of FIG. 1A operable in both a unidirectional and bidirectional state;
FIG. 4 is a flow chart of operations consistent with an embodiment;
FIG. 5A is a diagram of a system including an ACDC adapter, power management controller, boost DC to DC converter, battery and electronic device consistent with an embodiment for supplying current to the electronic device from the ACDC adapter and the battery;
FIG. 5B is a plot of supply current, ACDC adapter current and boost current, for the system of FIG. 5A;
FIG. 6A is a diagram of a system including an ACDC adapter, power management controller, boost DC to DC converter, battery and electronic device consistent with another embodiment for supplying current to the electronic device from the ACDC adapter and the battery;
FIG. 6B is a plot of supply current, ACDC adapter current and boost current, for the system of FIG. 6A;
FIG. 7A is a diagram of a system including an ACDC adapter, power management controller, boost DC to DC converter, battery, buck DC to DC converter and electronic device consistent with an embodiment for supplying current to the electronic device from the ACDC adapter and the battery and/or charging the battery;
FIG. 7B is a plot of supply current to the electronic device, ACDC adapter current, supply current to the buck DC to DC converter and boost current, for the system of FIG. 7A; and FIG. 8 is a flow chart of operations consistent with another embodiment.

Although the following Detailed Description will proceed with reference being made to illustrative embodiments, many alternatives, modifications, and variations thereof will be apparent to those skilled in the art. Accordingly, it is intended that the claimed subject matter be viewed broadly.

### DETAILED DESCRIPTION

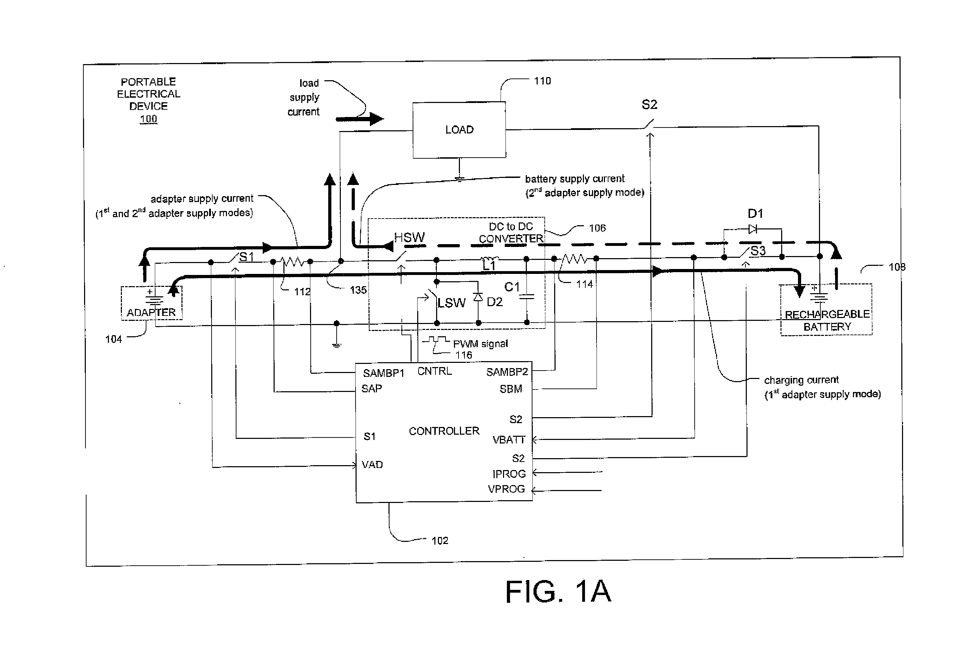

FIG. 1A is a block diagram of a portable electrical device 100. The portable electrical device 100 may include, but not be limited to, laptop computers, personal digital assistants, mobile phones, and cordless power tools. The portable electrical device 100 may include an adapter 104, a rechargeable battery 108, a load 110, a DC to DC converter 106, and a controller 102. In general, the controller 102 may be configured to control the DC to DC converter 106 to operate in two different adapter supply modes when the adapter 104 and rechargeable battery 108 are present.

In a first adapter supply mode, the DC to DC converter 106 may be configured to provide a charging current to the rechargeable battery 108. In a second adapter supply mode, the DC to DC converter 106 may be configured to provide a battery supply current to the system load 110 via the common node 135. In both the first and second adapter supply modes, the adapter 104 may provide an adapter supply current to the system load 110 via the common node 135. In the second adapter supply mode, the adapter supply current and the battery supply current may be simultaneously provided such that the adapter supply current and the battery supply current add together at the common node 13 5 to provide a load supply current to the load 110.

The adapter 104 may include an ACDC adapter or a DCDC adapter to supply power to the portable electrical device and/or to provide power to charge the rechargeable battery 108. Although shown internal to the portable electrical device 100, the adapter 104 may also be external to the portable electrical device 100. The rechargeable battery 108 may be of a variety of chemistries including, but not limited to, lithium-ion, nickel-cadmium, and nickel-metal hydride. The rechargeable battery 108 may also be included as part of a rechargeable battery pack. The load 110 may represent one or more loads or the entire system load of the portable electrical device 100.

The DC to DC converter 106 may be a synchronous rectifier converter including a high side switch HSW, a low side switch LSW, an inductor L1, and an output capacitor C1. In one embodiment, the DC to DC converter 106 may also include a diode D2 in parallel with the low side switch LSW. The high side switch HSW and low side switch LSW may be any variety of transistors including, but not limited to, metal oxide semiconductor field effect transistors (MOSFETs) such as a p-channel MOSFET (PMOS) or n-channel MOSFET (NMOS).

The controller 102 may accept a variety of input signals representative of power conditions of various components and representative of instructions regarding desired charging conditions. In response to these input signals, the controller 102 may provide output signals to control the DC to DC converter 106 and the state of various switches such as switches S1, S2, and S3. Some input signals to the controller 102 may be provided by sense resistors 112 and 114 and may be representative of particular current levels. For instance, the SAMBP1 and SAP terminals of the controller 102 may be coupled across the sense resistor 112 so that the voltage drop across the sense resistor 112 may provide a signal proportional to the adapter supply current flowing from the adapter 104. In addition, the SAMBP2 and SBM terminals of the controller 102 may be similarly coupled across the sense resistor 114 so that the voltage drop across the sense resistor 114 may provide a signal proportional to a charging current flowing from the adapter 104 to the rechargeable battery 108 during the first adapter supply mode.

Other input signals to the controller 102 may be representative of a voltage level. For instance, the VAD terminal of the controller 102 may accept an input signal representative of the voltage level of the adapter 104, and the VBATT terminal of the controller 102 may accept an input signal representative of the voltage level of the rechargeable battery 108. The IPROG terminal may accept an analog input signal representative of a desired charging current and the VPROG terminal may accept an analog input signal representative of a desired charging voltage. The analog signals provided to the IPROG and VPROG terminals may be provided by any variety of components of the portable electrical device 100. In one embodiment where the portable electrical device 100 includes a keyboard controller, the keyboard controller may incorporate at least to digital two analog converters (DACs) to provide the analog signals to the IPROG and VPROG terminals.

Switches S1, S2, and S3 may be implemented in variety of fashions to accomplish the functionality described herein. Switch S 1 may be referred to as an adapter switch which may turn ON and OFF as controlled by the controller 102 depending on, but not limited to, the presence of the adapter 104 having a suitable output voltage as monitored by the controller 102 via the VAD terminal. Switch S2 may be referred to as a battery switch which may turn ON and OFF as controlled by the controller 102 depending on, but not limited to, the presence of a rechargeable battery 108 having a suitable output voltage as monitored by the controller 102 via the VBATT terminal. Switch S3 may be referred to herein as a charging switch and may be coupled to the path between the DC to DC converter 106 and the rechargeable battery 108. The charging switch S3 may be operable in both a unidirectional state and bidirectional state. In a bidirectional state the charging switch S3 may permit a charging current to flow to the rechargeable battery 108 from the DC to DC converter 106 in the first adapter supply mode and may permit a battery supply current to flow from the rechargeable battery 108 to the load 110 via the common node 135 in the second adapter supply mode.

In a battery supply mode, an adapter 104 of suitable voltage level may not be present and a battery 108 of suitable voltage level may be present. The controller 102 may sense these respective conditions from the VAD and the VBATT terminals. The controller 102 may then instruct the adapter switch S 1 and the charging switch S3 to be OFF and the battery switch S2 to be ON. Accordingly, battery current would flow through the battery switch S2 to the load 110 from the rechargeable battery 108 in this battery supply mode.

In the first or second adapter supply modes, an adapter 104 of suitable voltage may be present and a rechargeable battery may also be present. The presence of the adapter 104 may be sensed by the controller 102 via the VAD terminal and the presence of the rechargeable battery 108 may be sensed by the controller 102 via the VBATT terminal. In the first and second adapter supply modes, the controller 102 may instruct the adapter switch S 1 to be ON and the battery switch S2 to be OFF.

In the first adapter supply mode, the rechargeable battery 108 may require a charging current and the load 110 may not require a power or current level in excess of the maximum power or current limit of the adapter 104. The current provided by the adapter 104 may then split at the common node 135 to provide and adapter supply current to the load 110 and a charging current to the rechargeable battery 108.

In the second adapter supply mode, the output of the DC to DC converter 108 and the adapter 104 may be coupled in parallel to the common node 135 to enable the rechargeable battery 108 and the adapter 104 to simultaneously provide power to the load 110. The controller 102 may switch the DC to DC converter from the first adapter supply mode to the second adapter supply mode when the current draw requirement of the load 110 exceeds the maximum available current limit of the adapter 104. Therefore, in the second adapter supply mode the adapter supply current and the battery supply current may be simultaneously provided such that the adapter supply current and the battery supply current add together at the common node 135 to provide a load supply current to the load 110.

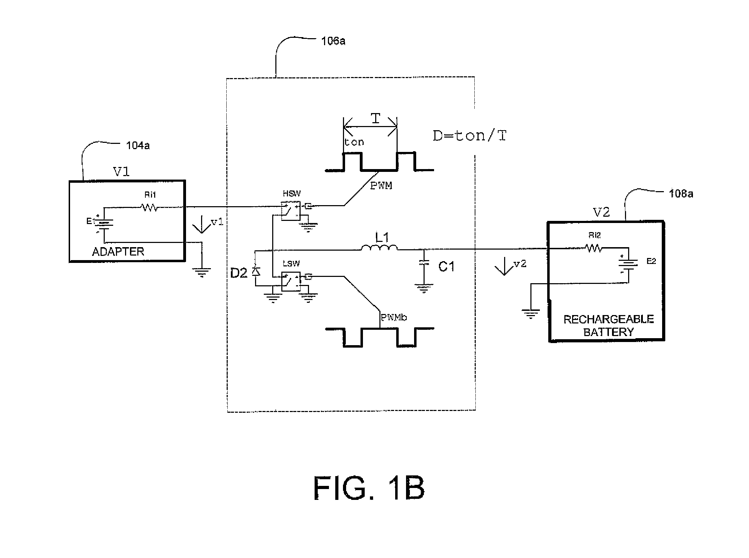

Other embodiments, e.g., some single battery embodiments, may not utilize the charging switch S3 and accompanying diode D1 of FIG. 1A or may keep the charging switch S3 in a bidirectional state to permit current flow in either direction through the switch S3. FIG. 1B illustrates an embodiment 106a of the DC to DC converter of FIG. 1A where the charging switch S3 and accompanying diode D1 of FIG. 1A are not utilized or the switch S3 is ON in a bidirectional state effectively bypassing the diode D1. The DC to DC converter 106a may be a synchronous rectifier converter including high side switch HSW, low side switch LSW, diode D2, inductor L1, and capacitor C1.

In the embodiment of FIG. 1B, the controller may instruct the low side switch LSW to remain OFF in the first adapter supply mode when a charging current is provided to the rechargeable battery 108. The synchronous rectifier converter 106a may therefore function as a conventional buck converter utilizing the high side switch HSW, diode D2, inductor L1, and capacitor C1 in the first adapter supply mode. The DC to DC converter 106a operating as a conventional buck converter may allow current (charging current) to flow in one direction towards the rechargeable battery 108, but not in the other direction towards the common node 135. In the second adapter supply mode, the high and low side switches HSW, LSW may both be responsive to the pulse with modulated (PWM) signal 116 provided by the controller to function as a boost converter to provide the battery supply current to the common node 135.

In the embodiment of FIG. 1B, the adapter 104a may be represented as a power source V1 having an ideal voltage source E1 and an internal resistance Ri1. The rechargeable battery 108a may be represented as a power source V2 having an ideal voltage source E2 and an internal resistance Ri2. The voltage v1 may represent the voltage at the source terminals of the adapter 104a and the voltage v2 may represent the voltage at the source terminals of the rechargeable battery 108a. If E1>E2 and v1>v2, then consider two cases 1) when the duty cycle (D) of the PWM signal 116 is greater than E2/E1 and 2) when the duty cycle D is less than E2/E1.

When D > E2/E1, the synchronous rectifier converter would work as a buck (step-down) converter having an input voltage of v1 and an output voltage of v2. The power would be transferred from the adapter 104a to the rechargeable battery 108a and may have a value equal to I2 = (v2 - E2)/Ri2, where I2 is the charging current provided to the battery, v2 is the voltage at the source terminals of the battery, E2 is the ideal voltage source of the battery, and Ri2 is the internal resistance of the battery. In addition, v2 = v1 * D, where D is the duty cycle of the PWM signal.

When D < E2/E1, the synchronous rectifier converter would work as a boost (step-up) converter having an input voltage of v2 and an output voltage of v1. The power would be transferred from the battery 108a. The battery supply current would flow toward V 1 any may have a value equal to I1 = (v1-E1)/Ri1, where I1 is the battery supply current, v1 is the voltage at the source terminals of the adapter, E1 is the ideal voltage source of the adapter, and Ri1 is the internal resistance of the adapter.

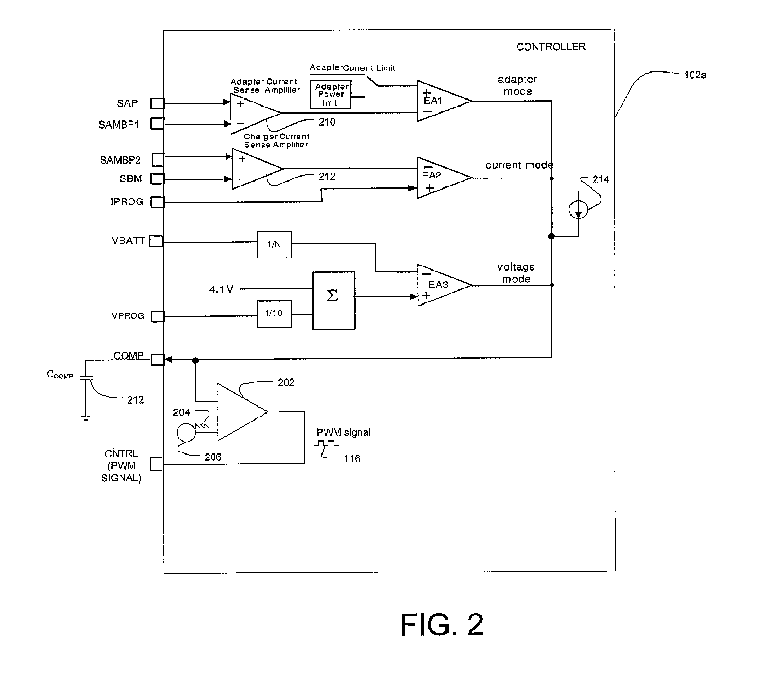

FIG. 2 illustrates an embodiment 102a of the controller 102 of FIG. 1A. The controller 102a may include a sense amplifier 210 to amplify the voltage drop across the sense resistor 112 representative of the adapter current from the adapter 104. The output of the sense amplifier 210 may be provided to the first error amplifier EA1. The first error amplifier EA1 may compare the output of the sense amplifier 210 with a threshold representative of a maximum power limit of the adapter 104. The first error amplifier EA1 may also compare the output of the sense amplifier 210 with a threshold representative of a maximum current limit of the adapter 104. The controller 102a may also include another sense amplifier 212 to amplify the voltage drop across the sense resistor 114 representative of the charging current to the battery 108 when the battery is charging in the first adapter supply mode. The output of the sense amplifier 212 may be provided to the second error amplifier EA2 for comparison to a charging current limit as provided via the IPROG terminal. A third error amplifier EA3 may compare a signal representative of the charging voltage with the analog voltage signal input the VPROG terminal representative of a desired charging voltage. A comparator 202 may compare the analog voltage signal at the COMP pin with a periodic signal at a fixed frequency such as a ramp signal 204 provided by the signal generator 206 and provide an output pulse width modulated (PWM) signal having a duty cycle depending on the value of the intersection of the COMP signal with the ramp signal.

If any of the limits monitored by the three error amplifiers EA1, EA2, EA3 is exceeded, that particular error amplifier would control the loop and would reduce the analog voltage at the COMP pin to reduce the duty cycle of the PWM signal 116. The analog voltage at the COMP pin may be reduced by the current sunk through the output of the error amplifier controlling the loop (e.g., error amplifier EA1, EA2, or EA3) and increased by the current source 214 forcing current in Ccomp 212. When the analog voltage at the COMP pin decreases the DC to DC converter's output voltage also decreases. Accordingly, the charging current provided to the rechargeable battery 108 would be reduced.

In the first adapter supply mode, the adapter 104 may simultaneously provide an adapter supply current to the load 110 via the common node 13 5 and a charging current to the rechargeable battery 108 via the DC to DC converter 106. If the adapter limit monitored by the error amplifier EA1 is exceeded, the charging current to the battery may be reduced to serve the increasing power requirement of the load 110. That is, powering the load 110 always takes priority over charging the rechargeable battery 108 during the first adapter supply mode. For example, if the load 110 requires more current while the battery is receiving a charging current, the charging current to the rechargeable battery 108 may be reduced to meet the demands of the load 110.

The controller 102 may also operate the DC to DC converter 106 in a second adapter supply mode where the DC to DC converter 106 is configured to supply a battery supply current to the load 110 via the common node 135. The battery supply current provided to the load 110 in this instance may flow in an opposite direction as the charging current that flows towards the rechargeable battery 108 as illustrated in FIG. 1A. The output of the DC to DC converter 106 in the second adapter supply mode may be in parallel with the adapter 104 to enable the adapter 104 to provide the adapter supply current to the load 110. The adapter supply current may be a fraction of the entire load supply current provided to the load 110. The remainder of the load supply current may be provided by the battery supply current via the node 135 when the DC to DC converter is operating in the second adapter supply mode. In other words, the adapter supply current and the battery supply current may add together to provide the load supply current to the load 110.

The controller 102 may sense the output current of the adapter 104 and switch the DC to DC converter 106 from operation in the first supply mode to operation in the second supply mode when a current requirement of the load 110 exceeds a maximum current limit of the adapter 104. For example, in the first supply mode the adapter 104 may provide power to both the load 110 and the rechargeable battery 108. As the current (power) requirement of the load 110 increases, an adapter limit may be reached as sensed by the first error amplifier EA1. Hence, the adapter control loop including the first error amplifier EA1 may reduce the analog voltage at the COMP pin thereby reducing the duty cycle of the PWM signal 116 to reduce the charging current to the rechargeable battery 108 so more is available to serve the load 110. The charging current may continue to be decreased as current requirements of the load 110 increase until finally the charging current is reduced to zero. At this point if the load 110 current demands still continued to increase and parallel powering via the second supply mode is not enabled, the internal protections of the adapter 104 may shut down the adapter 104.

The controller 102 consistent with an embodiment may be able to detect when the first error amplifier EA1 is controlling the duty cycle of the PWM signal 116 and the charging current becomes zero and force the switch S3 from a unidirectional state to a bidirectional state at that time. When the charging switch S3 is in the bidirectional state and ON, current flow is permitted in either direction. The DC to DC converter as a synchronous rectifier converter may start to boost the battery voltage so that a battery supply current may be provided from an output of the synchronous rectifier converter towards the common node 135 when the duty cycle of the PWM signal is below a threshold level.

This threshold level may be about equal to a voltage of the rechargeable battery divided by a voltage of the adapter. If the duty cycle of the PWM signal 116 is greater than this threshold level, the synchronous rectifier converter may act as a buck converter to buck an input voltage provided by the adapter 104 and to provide a charging current to the rechargeable battery 108. If the duty cycle of the PWM signal 116 is less than this threshold, the synchronous rectifier converter may act as a boost converter to boost a voltage of the rechargeable battery 108 to provide a supply current to the load 110 via the node 13 5. The adapter voltage is typically greater than the battery voltage so the battery voltage would need to be boosted in the second adapter supply mode in order to supply the load 110 any power (or current) out of the rechargeable battery 108 in excess of the adapter power (or current) limit. Through this operation, the adapter mode control loop would maintain the voltage drop on the sense resistor 112 at a limit level so that the adapter supply current would keep flowing out of the adapter 104 (no inter-current flow) but would not exceed the associated maximum adapter limit. The battery supply current provided by the battery 108 to the load 110 via the synchronous rectifier converter may then flow out of the battery through the charging switch S3 functioning in the bidirectional state in this instance.

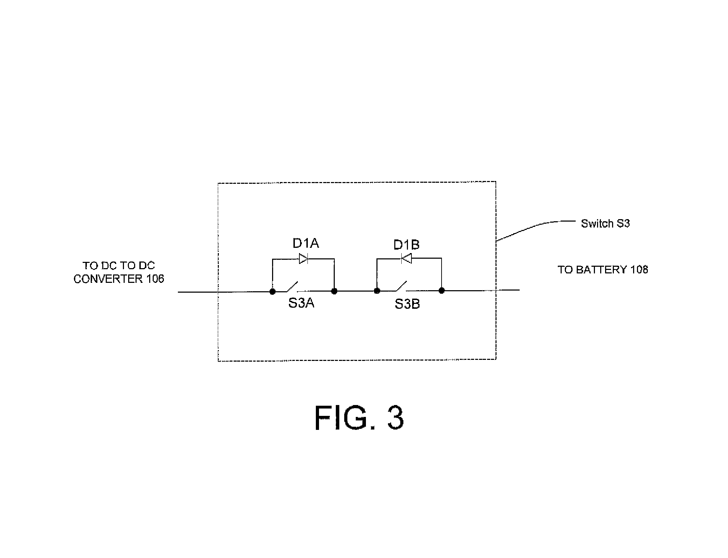

FIG. 3 illustrates one embodiment of the charging switch S3 that may function in a unidirectional state and in a bidirectional state. Such a switch S3 may be implemented in a variety of other fashions as well. The charging switch S3 of FIG. 3 may include switches S3A and S3B. Diode D1A may be coupled in parallel with switch S3A and may be in reverse bias with the battery. Diode D1B may be coupled in parallel with switch S3B and may in forward bias with the battery. When in the unidirectional state, the controller 102 may maintain switch S3B ON. Current from the battery would be blocked by the diode D1A. When changing from the unidirectional state to the bidirectional state, the controller may instruct both switches S3A and S3B to be closed thereby permitting current flow in both directions.

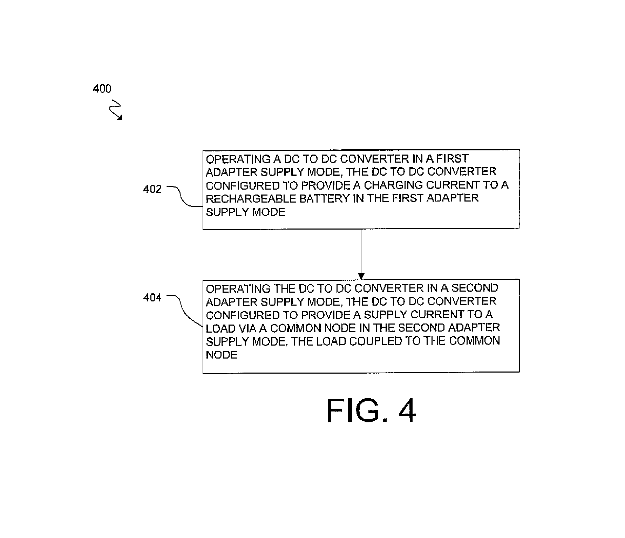

FIG. 4 illustrates operations 400 according to an embodiment. Operation 402 may include operating a DC to DC converter in a first supply mode, the DC to DC converter configured to provide a charging current to a rechargeable battery in the first supply mode. Operation 404 may include operating the DC to DC converter in a second supply mode, the DC to DC converter configured to provide a supply current to a load via a common node in the second supply mode, the load coupled to the common node.

Advantageously, the output voltage of the battery may be boosted to enable the battery and adapter to both simultaneously provide power to the system load in the second adapter supply mode. Therefore, the adapter 104 need not be oversized compared to the maximum power requirements of the system load 110. Therefore, the adapter may be smaller, lighter, less cumbersome, and less expensive than a conventional oversized adapter.

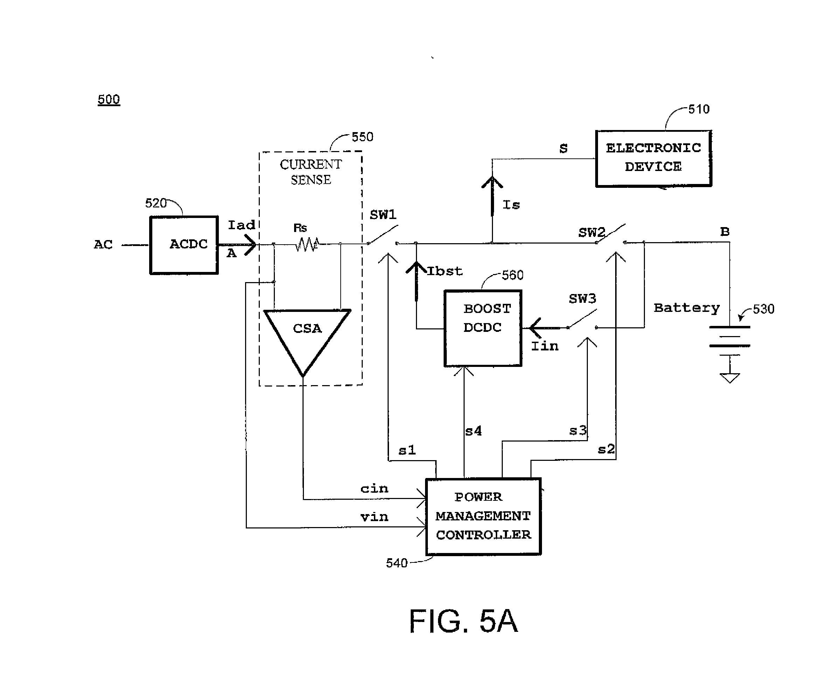

FIG. 5A is a block diagram of another embodiment of a system 500, consistent with the present disclosure. The system 500 includes an electronic device 510, an ACDC adapter 520, a battery 530, a power management controller 540, a current sense circuit 550 and a boost DC to DC converter 560, consistent with an embodiment for supplying current to the electronic device 510 from the ACDC adapter 520 and/or the battery 530. The electronic device 510 may include, but not be limited to, laptop computers, personal digital assistants, mobile telephones and cordless power tools. In general, the power management controller 540 may be configured to control the boost DC to DC converter 560 to supply current to the electronic device 510, e.g., when the supply current, Is, of the electronic device 510 exceeds a maximum output current, Iadmax, of the ACDC adapter 520.

An electronic device, e.g., electronic device 510, may be powered at node S with a supply voltage, Vs, and a supply current, Is. The electronic device 510 is configured to operate when its supply voltage, Vs, is within a range, e.g. Vsmin ≤ Vs ≤ Vsmax. The supply current, Is, i.e., current consumption, of the electronic device 510 generally depends on an operating state of the electronic device 510. For example, Is may be relatively low, e.g., on the order of 100 mA, when the electronic device 510 is in a power saving mode. Most of the time, an average supply current may be near a typical value, Isty, on the order of ones of Amps. For relatively short periods of time, the electronic device 510 may require peak supply currents, Ispk, significantly higher than the typical current, Isty, e.g., when the electronic device performs a plurality of power consuming tasks simultaneously.

Generally, the ACDC adapter 520 is the main power source for the electronic device 510. The ACDC adapter, also known as an AC adapter, is an AC to DC converter, configured to convert AC power to DC power, providing a DC output voltage VA and an output current Iad. For safe operation, the adapter 520 may have a maximum rated output current, Iadmax, and the adapter 520 may be configured to shut down under overload conditions, e.g., when Iad exceeds Iadmax for a period of time. The battery 530 may be a second and/or alternate power source for the electronic device 510. The battery is configured to provide an output voltage VB and an output current Ibt. The battery output voltage VB generally depends on a level of charge of the battery 530. The battery 530 may provide the output current, Ibt, at any level required by the electronic device 510, within the limits of the charge on the battery 530.

The power management controller 540 is configured to receive at least one input signal for detecting a presence or absence of a functional ACDC adapter 520. For example, the controller 540 may be configured receive a voltage vin, corresponding to an output voltage of the adapter 520 and/or cin, representative of the adapter 520output current, Iad. Current sense circuit 550 is configured to sense adapter 520 output current, Iad, and to provide an output, e.g., cin, representative of the output current, Iad, to the controller 540. The current sense circuit 550, depicted in FIG. 5A, includes a sense resistor Rs and a current sense amplifier CSA. The current sense circuit 550 may include a sense resistor Rs, in series with the adapter's 520 output current, Iad. The sense resistor Rs, may be coupled across inputs to the current sense amplifier CSA. The current sense amplifier CSA is configured to output a signal, cin, proportional to a voltage across the sense resistor Rs, representative of a current, e.g., Iad, through the sense resistor Rs. As will be appreciated by one skilled in the art, other current sense circuits may be used, configured to sense current Iad and provide an output representative of the sensed current, within the scope of the present disclosure.

The power management controller 540 is configured to provide control signals s1 and/or s2 to control switches SW1 and/or SW2, respectively, to control a source of power, e.g., adapter 520, and/or battery 530, to the electronic device 510. For example, if the controller 540 detects vin, and vin is within a supply voltage range of the electronic device 510, the controller 540 is configured to output control signals s1 and s2, configured to turn switch SW1 ON and SW2 OFF, respectively. In this example, the electronic device 510 will then be supplied by the adapter 520, at a supply voltage Vs equal to VA and a supply current Is, equal to Iad. In another example, if the controller 540 detects Vin, and Vin is less than a minimum supply voltage Vsmin of the electronic device 510, the controller 540 is configured to output control signals s1 and s2, configured to turn switch SW1 OFF and SW2 ON, respectively. In this example, the electronic device will then be supplied by the battery 530, at a supply voltage Vs equal to VB and a supply current Is, equal to Ibt.

The boost (step-up) converter 560 is configured to receive an input current, Iin at a first voltage and to output a current, Ibst, at a second voltage greater than the first voltage. The boost converter 560 is further configured to receive an enable signal, s4, from the power management controller 540. The enable signal, s4, is configured to enable the boost converter 560 to generate the output current, Ibst. The boost converter output current, Ibst, may have a maximum value of Ibstmax. When the boost converter 560 is enabled, e.g., s4 equal to logic high, the output current, Ibst, may increase from, e.g., zero to a maximum current, Ibstmax. The maximum boost current, Ibstmax, may depend on the battery 530 voltage, VB, and/or the adapter 520 voltage, VA. The boost converter 560 is configured so that the maximum boost converter output current, Ibstmax, is greater than the peak supply current, Ispk, of the electronic device 510 for the ranges of battery voltage VB and adapter voltage VA.

To that end, the values of the boost converter 560 may be selected, based on, for example, a priori knowledge of the expected maximum Ispk, the adapter voltage (VA) and the battery voltage VB. In addition, the power management controller 540 may be configured to disable the boost converter 560 if the battery is under a certain voltage and likely to be forced to excessive currents, for example, if both Ispk and VA/VB are beyond certain thresholds. In other words, the boost converter may be configured to provide Ibstmax>Ispk when the battery is above a certain voltage level (e.g., 75% of the fully charged battery voltage level) and the ratio between the adapter and the battery voltage is in a defined range (e.g., VA/VB is below a level when the battery is deemed as providing excessive current).

When the boost converter 560 is switched from enabled to disabled, e.g., the power management controller 540 outputs a control signal, s4, corresponding to boost converter 560 disabled, the output current, Ibst, of the boost converter 560 may then decrease to zero. As will be understood by one skilled in the art, the output current may decrease to zero relatively rapidly.

The power management controller 540 is configured to receive as inputs vin and cin, as described herein. Vin corresponds to the output voltage, VA, of the adapter 520 and cin corresponds to the output current Iad of the adapter 520. cin is representative of the output current, Iad, of the adapter 520. Accordingly, the power management controller 540 may be coupled to an output of the adapter 520. The power management controller 540 is configured to provide output signals s1, s2, s3 and/or s4. Output signals s1, s2 and s3 are configured to control switches SW1, SW2 and SW3, respectively. Output signal s4 is configured to enable or disable boost converter 560. Accordingly, the power management controller 540 is coupled to the boost converter 560.

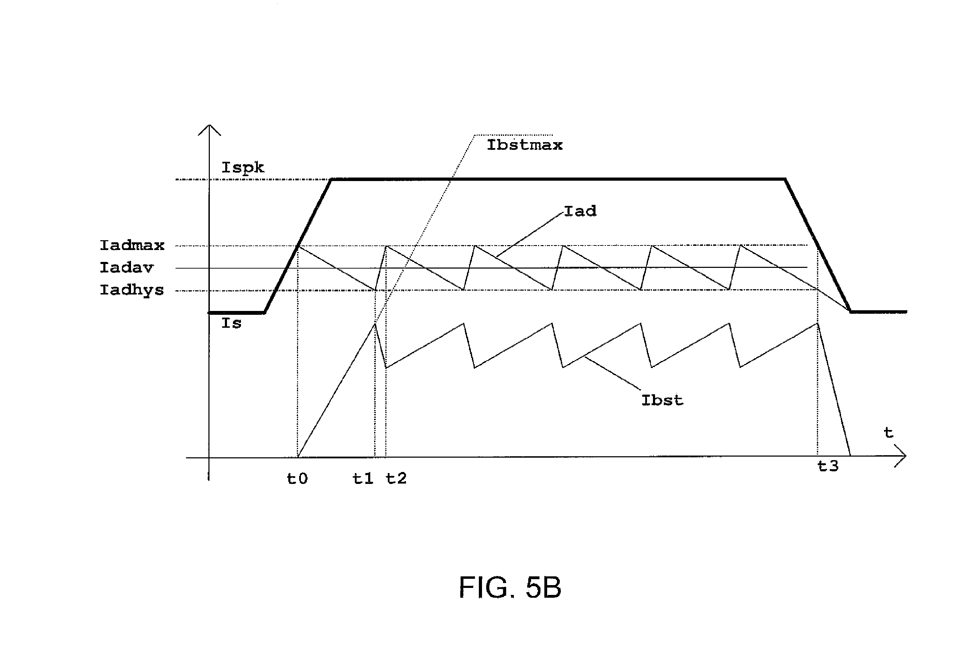

The power management controller 540 is configured to compare the output current of the adapter, Iad, with a first reference, cmax, corresponding to the maximum rated output current, Iadmax, of the adapter 520. The power management controller 540 is further configured to compare the output current, Iad, of the adapter 520, with a second reference, cmin, corresponding to a hysteresis current, Iadhys. cmax is representative of Iadmax and cmin is representative of Iadhys. In other words, cmax may be proportional to Iadmax and cmin may be proportional to Iadhys. Iadhys is less than Iadmax and, accordingly, cmin is less than cmax. References cmax and cmin may be provided internal to the power management controller 540 or may be provided via input terminals to the controller 540. Operation of the system of FIG. 5A may be understood with reference to FIG. 5B.

FIG. 5B is a plot of supply current, Is, ACDC adapter current, Iad, and boost current, Ibst, for system 500. FIG. 5B illustrates currents, Is, Iad, and Ibst, during an example of operation of system 500. In this example, the supply current, Is, of electronic device 510 ranges from a value less than the maximum rated output current, Iadmax of the adapter 520, to a value, Ispk, greater than Iadmax over a time period shown in the plot. Operation of system 500 will be described with reference to FIG. 5B. Initially, at time less than t0, Is is less than Iadmax (and less than Iadhys). At a time approaching t0, Is begins to increase, and at a time just before t0, Is is slightly less than Iadmax. During this time period (i.e., time from initial time up to just before t0), cin is less than cmax, corresponding to Iad less than Iadmax. The power management controller 540 is configured to output the signal s4, corresponding to disabled, to the boost converter 560 and the signal s3, corresponding to OFF, to switch SW3. Accordingly, the output current, Ibst, of the boost converter 560 is zero and the electronic device 510 is supplied by the adapter 520, for this time period.

At time t0, Is reaches Iadmax. In other words, at time t0, supply current, Is, to the electronic device 510, and the output current, Iad, of the adapter 520 have risen to Iadmax, the rated maximum output current of the adapter 520. At time t0, cin, representative of Iad, is equal to the first reference, cmax, representative of Iadmax. For example, the controller 540 may include a comparator configured to compare cin and reference, e.g., cmax and/or cmin, and to provide an output based, at least in part, on the comparison. The controller 540 is configured to enable the boost converter 560 when cin increases and reaches cmax. The controller 540 is configured to output an enable signal s4 to enable the boost converter and a control signal s3 to turn switch SW3 ON. When switch SW3 is turned on, the battery 530 is coupled to the boost converter 560 and is configured to supply input current Iin to the boost converter 560.

For the time period t0 to t1, the boost converter 560 is enabled and the output current, Ibst, of the boost converter increases. As shown in FIG. 5B, a maximum boost current, Ibstmax may be greater than the peak supply current, Ispk. As the boost current, Ibst, increases, the adapter current, Iad, may decrease. In the example depicted in FIG. 5B, during the time period, t0 to t1, as the boost current, Ibst, increases, the adapter current, Iad, decreases and the supply current, Is, continues to increase. The supply current, Is, during the time interval t0 to t1, is the sum of the boost current, Ibst, and the adapter current, Iad.

At time t1, the adapter current, Iad, has decreased to Iadhys and the boost current has increased to a first value (e.g., Is - Iadhys). At time t1, cin, representative of Iad, is equal to the second reference, cmin, representative of Iadhys. The controller 540 is configured to disable the boost converter 560 when cin decreases and reaches cmin. The controller 540 is configured to output a disable signal s4 to disable the boost converter and a control signal s3 to turn switch SW3 OFF. When switch SW3 is turned off, the battery 530 is disconnected from the boost converter 560 and Ibst decreases, relatively rapidly, to a second value (e.g., Is - Iadmax) at time t2. If Is remains constant, Iad will increase relatively rapidly to Iadmax, as Ibst decreases to the second value.

At time t2, similar to time t0, the controller 540 is configured to enable the boost converter 560 using signal s4 and to couple the battery 530 to the boost converter 560 using signal s3 and switch SW3. The process may be repeated as long as Is remains above Iadmax, i.e., to time t3. It may be appreciated that this process is hysteretic. The adapter 520 output current Iad varies between Iadmax and Iadhys, with an average Iadav, less than Iadmax, while the supply current, Is, to the electronic device 510 remains at Is, greater than Iadmax.

Accordingly, with reference to FIGS. 5A and 5B, the electronic device 510 may be provided supply current, Is, by the adapter 520 when Is is less than Iadmax, and by the adapter 520 and battery 530 via boost converter 560, when Is is greater than Iadmax. The power management controller 540 is configured to provide an enable or disable signal, s4, to the boost converter 560 and a control signal, s3 to switch SW3, based, at least in part, on a signal, cin, representative of the output current, Iad, of the adapter 520. The power management controller 540 is configured to compare cin to a first reference, cmax, representative of Iadmax and a second reference, cmin, representative of Iadhys, and to control the boost converter 560 to maintain Id between Iadmax and Iadhys when Is is greater than Iadmax.

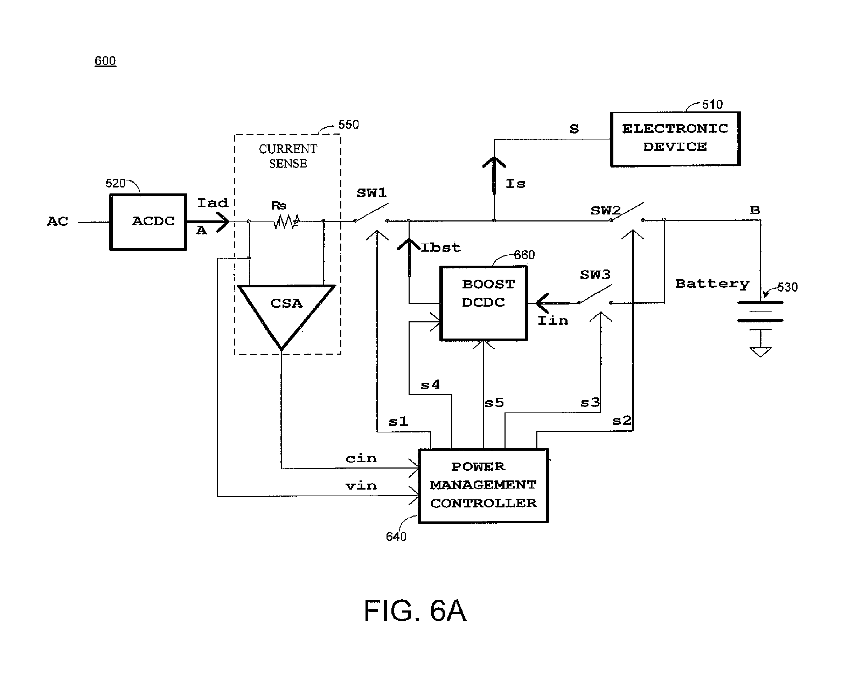

FIG. 6A is a block diagram of another embodiment of system 600, consistent with the present disclosure. The system 600 includes an electronic device 510, an ACDC adapter 520, a battery 530, a power management controller 640, a current sense circuit 550, and a boost DC to DC converter 660. The electronic device 510, adapter 520 and battery 530 are as described herein with respect to system 500. Similar to power management controller 540, power management controller 640 is configured to receive cin and vin and to provide control signals s1 to switch SW1, s2 to switch SW2 and s3 to switch SW3, as described herein. Power management controller 640 is further configured to provide control signal s4 to boost converter 660, to enable boost converter 660. Similar to boost converter 560, boost converter 660 is configured to receive current Iin from battery 530 and control signal s4 from power management controller 640 and to output boost current Ibst, as described herein.

It may be appreciated that system 500 may include ripple in the adapter 520 output current Iad (e.g., Iadmax-Iadhys) and in the boost converter 660 output current Ibst. It may be desirable to reduce the amplitude of the ripple. Reducing the ripple may be implemented at a cost of a relatively more complex control circuit and/or control method. System 600 is configured to reduce ripple in the adapter 520 output current Iad, based at least in part, on an additional control signal s5. Power management controller 640 is configured to generate control signal s5 and to provide control signal s5 to boost converter 660. Control signal s5 is configured to reduce the ripple using, e.g., negative feedback control, based at least in part, on adapter 520 current Iad and adapter 520 maximum rated output current Iadmax.

For example, the power management controller 640 is configured to receive cin, representative of adapter current Iad. The power management controller 640 may include or may be provided on another input, the first reference, cmax, representative of adapter 520 maximum rated output current Iadmax. The power management controller 640 may include or may be provided on another input, a second reference cmin, representative of an adapter 520 current Iaden. The adapter 520 current Iaden is configured to be used to enable the boost converter 660, as described herein. cmin is generally less than cmax. The power management controller 640 may be further configured to generate an error signal, e.g., control signal s5, based at least in part, on cin and cmax. For example, the power management controller 640 may include an error amplifier configured to generate the control signal s5. Control signal s5 may be proportional to a difference between cin and cmax. The power management controller 640 is configured to provide the error signal s5 to the boost converter 660. The boost converter 660 is configured to control the boost current Ibst based, at least in part, on the error signal s5. For example, the boost converter 660 may be configured to adjust a duty cycle of the boost converter 660, based at least in part, on the error signal s5. The duty cycle may be increased to increase Ibst and decrease Iad when Iad is greater than Iadmax and the duty cycle may be decreased to decrease Ibst and increase Iad when Iad is less than Iadmax, based at least in part on the error signal s5. The power management controller 640 and boost converter 660 may then operate to maintain the adapter 520 output current at or near Iadmax, when the supply current Is to the electronic device 510 exceeds Iadmax, by controlling Ibst.

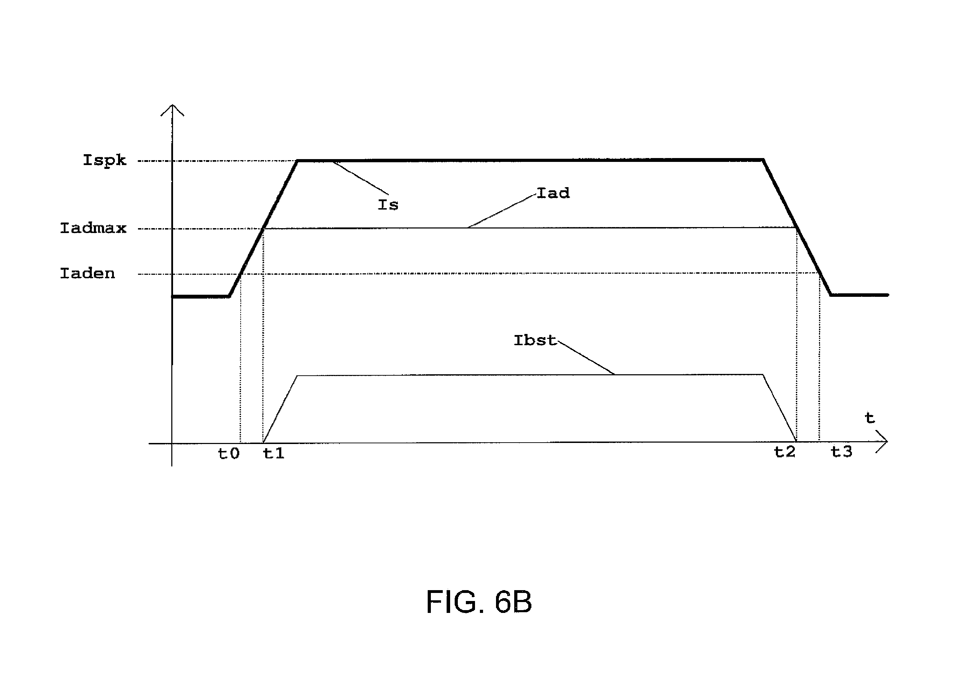

FIG. 6B is a plot of supply current, Is, ACDC adapter current, Iad, and boost current, Ibst, for system 600. FIG. 6B illustrates currents, Is, Iad, and Ibst, during an example of operation of system 600. In this example, the supply current, Is, of electronic device 510 ranges from a value less than the maximum rated output current, Iadmax, of the adapter 520 (and less than Iaden), to a value, Ispk, greater than Iadmax over a time period shown in the plot. Operation of system 600 will be described with reference to FIG. 6A and 6B.

Initially, at time less than t0, Is is less than Iadmax (and less than Iaden). At a time approaching t0, Is begins to increase, and at a time just before t0, Is is slightly less than Iaden. During this time period (i.e., time from initial time up to just before t0), cin is less than cmin, corresponding to Iad less than Iaden. The power management controller 640 is configured to output the signal s4, corresponding to disabled, to the boost converter 660 and the signal s3, corresponding to OFF, to switch SW3. Accordingly, the output current, Ibst, of the boost converter 660 is zero and the electronic device 510 is supplied by the adapter 520, for this time period.

At time t0, Is and Iad reach Iaden. In other words, at time t0, supply current, Is, to the electronic device 510, and the adapter 520 output current Iad have risen to Iaden. At time t0, cin, representative of Iad, is equal to the second reference, cmin, representative of Iaden. The controller 640 is configured to enable the boost converter 660 when cin increases and reaches cmin. The controller 640 is configured to output an enable signal s4 to enable the boost converter and a control signal s3 to turn switch SW3 ON. When switch SW3 is turned on, the battery 530 is coupled to the boost converter 660 and is configured to supply input current Iin to the boost converter 660. However, since the adapter 520 output current, Iad, is less than Iadmax, at time t0, the boost converter 660 output current, Ibst, remains zero, based at least in part on error signal s5, output by the power management controller 640.

At time t1, Is reaches Iadmax. In other words, at time t1, supply current, Is, to the electronic device 510, and the output current, Iad, of the adapter 520 have risen to Iadmax, the rated maximum output current of the adapter 520. At time t1, cin, representative of Iad, is equal to the first reference, cmax, representative of Iadmax. The controller 640 is configured provide the error signal s5 to the boost converter 660. The boost converter 660 is configured to generate the boost current Ibst in response to the error signal s5. The boost converter 660 output current Ibst is based, at least in part, on the error signal s5. The boost current, Ibst, is configured to be equal to the supply current, Is, minus the adapter 520 maximum rated current, Iadmax, based, at least in part, on the feedback control provided by the power management controller 640, error signal s5 and the boost converter 660. In other words, the power management controller 640 is configured to generate the error signal s5 based, at least in part on the adapter 520 output current, Iad, and the adapter 520 maximum rated current, Iadmax, and the boost converter 660 is configured to adjust Ibst, based at least in part on error signal s5, to maintain Iad at or near Iadmax. The boost current, Ibst, may then equal the supply current Is minus the adapter maximum rated output current, Iadmax. This control is illustrated for time period t1 to t2 (with Is equal to peak supply current, Ispk).

At time t2, the supply current, Is, has decreased to Iadmax (Iad equals Iadmax) and the boost current has decreased to zero, based at least in part, on error signal s5. At time t2, the adapter 520 is providing supply current Is. After time t2, Iad continues to decrease to Iaden, i.e., cin, representative of Iad, is equal to the second reference, cmin, representative of Iaden. When Id reaches Iaden (i.e., cin equals cmin), the power management controller 640 is configured to provide control signal s4 to the boost converter 660 and s3 to switch SW3 resulting in the boost converter being disabled and the SW3 turning OFF. The adapter 520 continues to provide supply current, Is, to the electronic device 510.

Accordingly, with reference to FIGS. 6A and 6B, the electronic device 510 may be provided supply current, Is, by the adapter 520 when Is is less than Iadmax, and by the adapter 520 and battery 530 via boost converter 660, when Is is greater than Iadmax. The power management controller 640 is configured to provide an enable or disable signal, s4, to the boost converter 660 and a control signal, s3 to switch SW3, based, at least in part, on a comparison of cin, representative of the adapter 520 output current, Iad, and the second reference, cmin, representative of Iaden. The power management controller 640 is configured to compare cin to a first reference, cmax, representative of Iadmax, and to generate an error signal s5 to control the boost converter 660 to maintain Id at or near Iadmax, and Ibst at or near Is minus Iadmax, when Is is greater than Iadmax, i.e., using feedback control. Advantageously, the feedback control may reduce the ripple in Iad and/or Ibst.

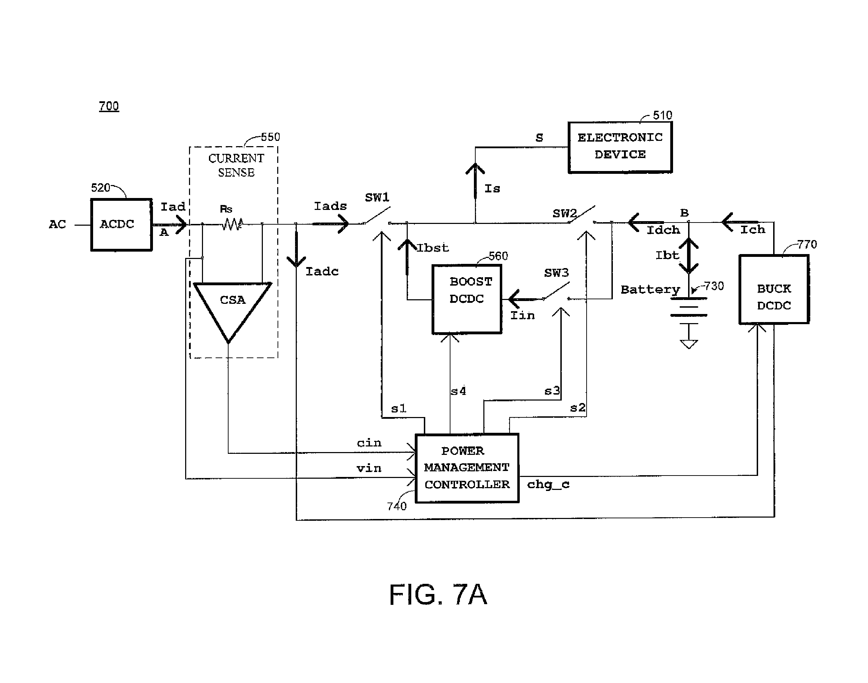

FIG. 7A is a block diagram of another embodiment of a system 700, consistent with the present disclosure. The system 700 includes an electronic device 510, an ACDC adapter 520, a current sense circuit 550, a boost DC to DC converter 560, a power management controller 740, a rechargeable battery 730, and a buck DC to DC converter 770. The electronic device 510, ACDC adapter 520, current sense circuit 550 and boost DC to DC converter 560 are as described herein with respect to system 500. Although shown as separate elements, the boost converter 560 and the buck converter 770 may be included in a buck-boost converter, as will be understood by those skilled in the art. Similar to power management controller 540, power management controller 740 is configured to receive cin and vin and to provide control signals s1 to switch SW1, s2 to switch SW2, s3 to switch SW3 and s4 to boost converter 560, as described herein. Power management controller 740 is further configured to provide one or more control signals, collectively labeled chg_c, to buck converter 770, as described herein.

Rechargeable battery 730 is configured to receive a controlled charging current, Ich, from, e.g., buck converter 770. The buck converter 770 is configured to receive a DC input current Iadc at an input voltage VA, from, e.g., the adapter 520, and to provide the charging current Ich at a voltage VB, less than voltage VA. As is known to one skilled in the art, an input current, e.g., Iadc, and an output current, e.g., Ich, of a buck converter, e.g., buck converter 770, are related by a constant of proportionality. In other words, Iadc = x * Ich, where x is the constant of proportionality and is less than one. Accordingly, adjusting Iadc or Ich results in a similar (i.e., proportional) adjustment in Ich or Iadc. The adapter 520 is configured to provide the input current, Iadc, to the buck converter 770. Accordingly, the adapter 520 output current Iad may include the buck converter 770 input current Iadc and a current, Iads, that may be provided to the electronic device 510.

Power management controller 740 is configured to control the buck converter 770 to provide the charging current Ich to rechargeable battery 730. As is known to one skilled in the art, there exists a relatively large variety of methods for controlling a buck converter, configured to charge a rechargeable battery. The methods may include, but are not limited to, enabling and disabling functions, output current control, protection functions and/or other functions known to those skilled in the art. In order to provide such functions, the power management controller 740 may include other inputs and/or outputs configured to provide such functions and/or to control the buck converter 770 to provide one or more of such functions. Power management controller 740 is configured to provide one or more control signal(s), collectively labeled chg_c to the buck converter 770. The control signal chg_c is configured to control the buck converter 770 charging current, Ich, and correspondingly Iadc. The power management controller 740 is configured to limit a value of the charging current, Ich, based at least in part, on a value of the adapter 520 rated maximum output current Iadmax. For example, the power management controller 740 may limit the charging current Ich using control signal chg_c.

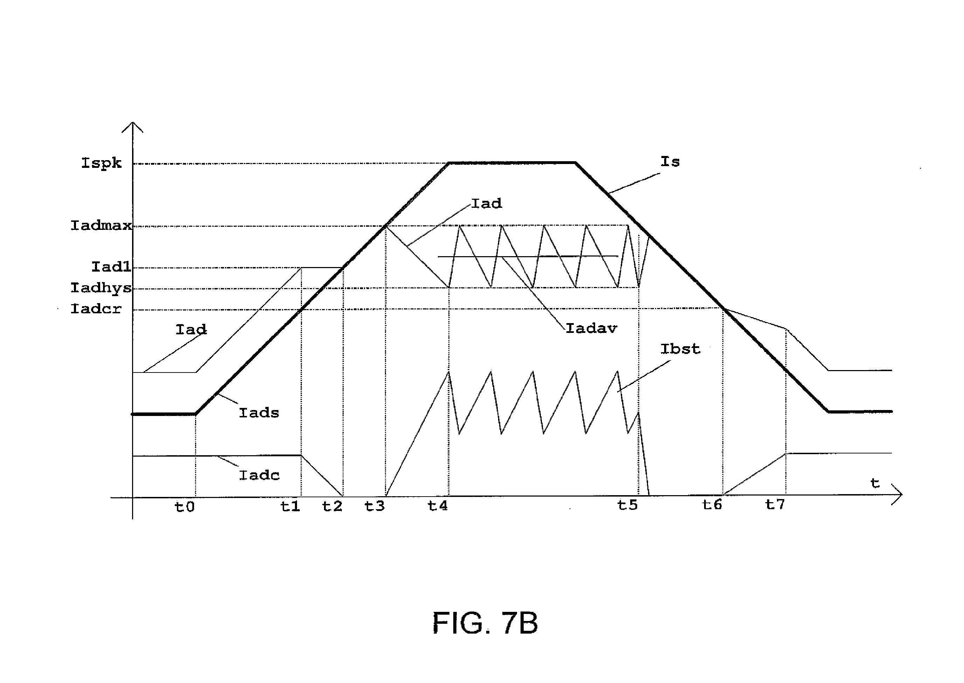

FIG. 7B is a plot of supply current, Is, to the electronic device 510, ACDC adapter 520 current, Iad, buck DC to DC converter 770 supply current, Iadc, current, Iads, supplied to the electronic device 510 by the adapter 520, and boost converter 560 boost current, Ibst, during an example of operation of system 700. The adapter 520 current, Iad, includes Iads and Iadc. In this example, the supply current, Is, to the electronic device 510, ranges from a value less than the adapter 520 maximum rated output current, Iadmax, to a value, Ispk, greater than Iadmax, over a time period illustrated in the plot. Operation of system 700 will be described with reference to FIGS. 7A and 7B.

Initially, at time less than t0, the adapter 520 current Iad is less than Iadmax. The adapter 520 current, Iad, is the sum of the supply current, Iads, delivered to the electronic device 510 from the adapter 520 and the current, Iadc, delivered to the buck converter 770. Accordingly, the supply current, Is, of the electronic device 510 equals Iads. The power management controller 740 is configured to enable and/or control the buck converter 770 via, e.g., signal(s) chg_c. During the time less than t0, Iadc is supplied to the buck converter 770 and a constant current, Ich, is supplied to battery 730 by the buck converter 770, i.e., Ich=Ibt=constant.

At time t0, Is begins to increase and continues to be provided by the adapter 520, i.e., Is = Iads. During the time interval t0 to t1, the current Iadc provided to the buck converter 770 by the adapter 520 remains constant and Iads increases as Is increases, i.e., Is=Iads.

The power management controller 740 may be configured to control the buck converter 770 charging current Ich, based at least in part, on the adapter 520 total output current Iad. For example, the power management controller 740 may include, or may be provided on another input, a third reference cad1, representative of a threshold current Iad1. cad1 may be less than the first reference, cmax, representative of Iadmax. The power management controller 740 may be configured to compare cin, representative of the total output current Iad, to cad1, representative of the threshold current Iad1. The power management controller 740 may be further configured to control the buck converter 770 to reduce the charging current, Ich, and as a result reduce the current, Iadc, supplied to the buck converter 770. In this manner, the adapter 520 total output current, Iad, may be maintained at the threshold current Iad1. In other words, the Iadc may be controlled using feedback control based, at least in part, on the adapter 520 total output current Iad. This is illustrated during the time interval t1 to t2. At time t1, the adapter 520 total output current Iad reached Iad1 and, as a result, Iadc began to decrease based, at least in part on signal(s) chg_c from power management controller 740 to buck converter 770. In other words, as Is continues to increase, Iadc is decreased to maintain Iad at Iad1, until Iadc reaches zero (e.g., at time t2).

If the electronic device 510 supply current, Is, continues to increase, as illustrated for example, during time interval t2 to t3, the supply current Is may equal the adapter 520 total output current Iad which may equal the adapter 520 rated maximum output current Iadmax. This is illustrated at time t3. The power management controller 740 may be configured to disable the buck converter 770 and to enable the boost converter 560. The power management controller 740 may be configured to control the boost converter 560 and boost converter 560 boost current, Ibst, to maintain the adapter 520 total output current, Iad, at Iadav between Iadmax and Iadhys, as described herein, in particular, with respect to system 500. This is illustrated during the time interval t3 to t5.

At time t5, the adapter 520 output current, Iad, is at Iadhys and the electronic device 510 supply current has decreased to below Iadmax and continues to decrease. At time t5, the boost converter 560 may be disabled by the power management controller 740, as described herein with respect to system 500. At time t6, the supply current, Is, and the adapter 520 output current Iad reach Iadcr. At time t6, the power management controller 740 may be configured to enable the buck converter 770, to begin providing a charging current Ich. At t7, the charging current Ich may reach a nominal charging level, controlled by power management controller 740 using signal(s) chg_c provided to the buck converter 740.

Accordingly, with reference to FIGS. 7A and 7B, the electronic device 510 may be provided a supply current, Is (=Iad), by the adapter 520 when Is is less than Iadmax, and by the adapter 520 and battery 730, via boost converter 760, when Is is greater than Iadmax. The battery 730 may be provided a current, Iadc, from the adapter 520 when the adapter 520 current Iads supplied to the electronic device 510 is less than Iader (and the total adapter 520 current Iad is less than Iad1). The power management controller 740 is configured to enable and/or disable the boost converter 560 and/or the buck converter 770, based, at least in part, on a comparison of cin, representative of the adapter 520 output current, Iad, and one or more references, e.g., cmax, cmin and/or cad1. The boost converter 560 and buck converter 770 may be included in a buck-boost converter, as described herein. Advantageously, the adapter 520 may have a rated maximum output current Iadmax that is less than a peak current, Ispk, of the electronic device 510, resulting in a potentially lower cost and/or smaller size adapter. The embodiment of system 700 may be configured to supply the peak current, Ispk, for a period of time, including Iad and Ibst, as described herein. Further, the embodiment of system 700 may be configured to charge a rechargeable battery when the electronic device 510 supply current Is (and therefore Iad) is less than a threshold.

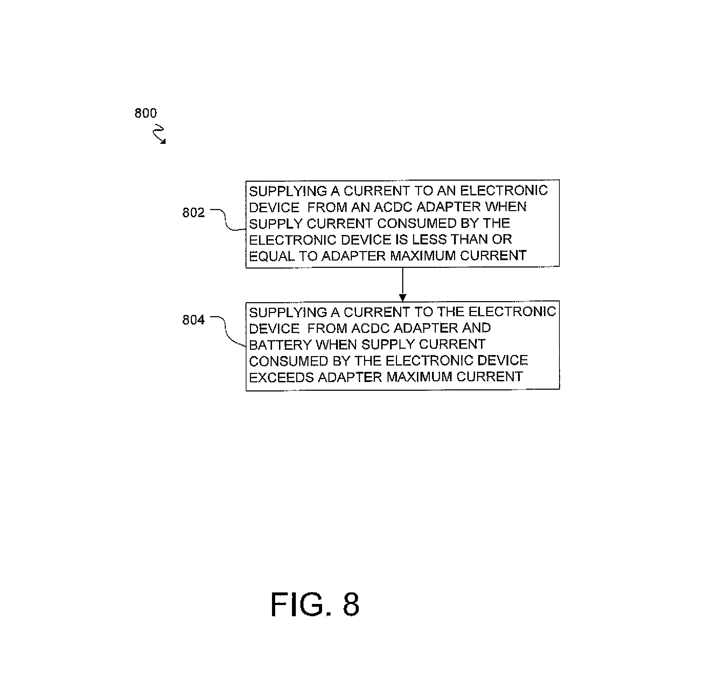

FIG. 8 illustrates operations 800 according to another embodiment. Operation 802 may include supplying a current to an electronic device from an ACDC adapter when the supply current consumed by the electronic device is less than or equal to the adapter's maximum rated output current. Operation 804 may include supplying a current to an electronic device from the ACDC adapter and a battery when the supply current consumed by the electronic device exceeds the adapter's maximum rated output current.

Advantageously, the ACDC adapter may be sized with a maximum rated output current less than a peak load current. The output voltage of the battery may be boosted to enable the battery and adapter to both simultaneously provide power to the system load. The adapter may therefore be smaller, lighter, and/or less expensive than a conventional oversized adapter.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Other modifications, variations, and alternatives are also possible.

## Claims

1. An apparatus comprising:
a DC to DC converter configured to be coupled to a battery and an electronic device; and
a controller coupled to the DC to DC converter, the controller configured to be coupled to an AC to DC adapter,
wherein the controller is configured to couple the AC to DC adapter to the electronic device and the DC to DC converter to the battery and the electronic device, if a supply current consumed by the electronic device exceeds a maximum rated output current of the AC to DC adapter.

2. The apparatus of claim 1, further comprising a current sense circuit coupled to the controller, the current sense circuit configured to be coupled to the AC to DC adapter and to sense an output current of the AC to DC adapter, wherein the controller is configured to couple the DC to DC converter to the battery and the electronic device based, at least in part, on the sensed current.

3. The apparatus of claim 1, wherein the DC to DC converter further comprises a buck converter, wherein the controller is configured to couple the buck DC to dc converter to the AC to DC adapter and the battery, and to control the buck DC to DC converter to charge the battery when the supply current to the electronic device is less than the maximum rated current of the AC to DC adapter.

4. The apparatus of claim 1, wherein the controller is configured to control an output current of the AC to DC adapter to maintain the output current of the AC to DC adapter between a first value and a second value, less than the first value, when the supply current to the electronic device exceeds the maximum rated output current of the AC to DC adapter.

5. The apparatus of claim 4, wherein the first value is the maximum rated output current of the AC to DC adapter and the second value is a hysteresis value.

6. The apparatus of claim 1, wherein the DC to DC converter comprises a boost DC to DC converter.

7. The apparatus of claim 1, wherein the controller is configured to control an output current of the AC to DC adapter to maintain the output current of the AC to DC adapter approximately equal to the maximum rated output current of the AC to DC adapter.

8. A method comprising:
supplying a first current to an electronic device from an AC to DC adapter when a supply current consumed by the electronic device is less than or equal to a maximum rated output current of the AC to DC adapter; and
supplying the first current to the electronic device from the AC to DC adapter and a second current to the electronic device from a DC to DC converter coupled to a battery when the supply current consumed by the electronic device exceeds the maximum rated output of the AC to DC adapter.

9. The method of claim 8, further comprising sensing an output current of the AC to DC adapter and coupling the DC to DC converter to the battery and the electronic device, based at least in part, on the sensed current.

10. The method of claim 8, further comprising:
coupling the DC to DC converter to the battery and the AC to DC adapter; and
controlling the DC to DC converter to charge the battery when the supply current consumed by the electronic device is less than the maximum rated output current of the AC to DC converter.

11. The method of claim 8, further comprising controlling an output current of the AC to DC adapter to maintain the output current of the AC to DC adapter between a first value and a second value, less than the first value, when the supply current consumed by the electronic device exceeds the maximum rated output current of the AC to DC adapter.

12. The method of claim 11, wherein the first value is the maximum rated output current of the AC to DC adapter and the second value is a hysteresis value.

13. The method of claim 8, further comprising controlling an output current of the AC to DC adapter to maintain the output current of the AC to DC adapter approximately equal to the maximum rated output current of the AC to DC adapter when the supply current consumed by the electronic device exceeds the maximum rated output current of the AC to DC adapter.
